# EUROPEAN PATENT APPLICATION

(11) **EP 3 910 845 A1**
(43) Date of publication of application: **17.11.2021**
(21) Application number: 19914992.3
(22) Date of filing: 14.02.2019
(51) Int. Cl.: H04L 5/00

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: TANG, Hai, Dongguan, Guangdong 523860 (CN)
(74) Representative: Rossi, Ugo
(86) International application number: PCT/CN2019/075120
(87) International publication number: WO 2020/164075

(57) **Abstract**

A wireless communication method, a terminal device and a network device, being able to determine timing positions and a quasi-co-located (QCL) relationship of synchronization signal blocks (SSBs). Said method comprises: a terminal device determining a first number of a first SSB and a second number of the first SSB, the first number of the first SSB being used for indicating the timing position of the first SSB in a first time unit, and the second number of the SSB being used for determining QCL information about the first SSB; and the terminal device determining the timing position of the first SSB in the first time unit according to the first number of the first SSB, and determining a QCL relationship between the first SSB and other SSBs according to the second number of the first SSB.

## Description

### Technical Field

Embodiments of the present application relate to the field of wireless communication, and particularly to a wireless communication method, a terminal device, and a network device.

### Background

In a 5-Generation New Radio (5G NR) system, an index of a Synchronization Signal (SSB) can be sent periodically. In an SSB period, an available sending position of an SSB is decided, and a terminal device may determine the sending position of the SSB according to the received SSB index.

On an unlicensed spectrum, a communication device follows a principle of "Listen Before Talk (LBT)". That is, before sending signals on a channel of an unlicensed spectrum, the communication device needs to perform channel sensing first, and the communication device can send signals only when the result of channel sensing is that the channel is idle. If the channel sensing result of the communication device on a channel of an unlicensed spectrum is that the channel is busy, the communication device cannot send signals.

When the 5G NR system is applied to an unlicensed spectrum, a network device can send SSBs only after succeeding in LBT and obtaining a channel use right. That is, in an unlicensed frequency band, the actual starting position for sending SSBs is uncertain, and after receiving the SSBs, a terminal device cannot know a Quasi-co-located (QCL) relationship between the SSBs, and therefore cannot combine and filter SSBs having a QCL relationship, thus affecting the system performance.

Therefore, how to determine an actual sending position of an SSB and a QCL relationship between SSBs is a problem worth studying.

### Summary

Embodiments of the present application provide a wireless communication method, a terminal device and a network device, a time domain position and a QCL relationship of an SSB can be determined according to the first and second numbers of the SSB.

In a first aspect, a wireless communication method is provided, which includes the following acts: determining, by a terminal device, a first number of a first synchronization signal block (SSB) and a second number of the first SSB, wherein the first number of the first SSB is used for indicating a timing position of the first SSB in a first time unit, and the second number of the first SSB is used for determining quasi-co-location (QCL) information of the first SSB; determining, by the terminal device, the timing position of the first SSB in the first time unit according to the first number of the first SSB, and determining a QCL relationship between the first SSB and other SSBs according to the second number of the first SSB.

In a second aspect, a wireless communication method is provided, which includes the following acts: sending, by a network device, a first SSB to a terminal device, wherein the first SSB includes a first number of the first SSB and a second number of the first SSB; the first number of the first SSB is used for indicating a timing position of the first SSB in the first time unit, and the second number of the SSB is used for indicating quasi-co-location (QCL) information of the first SSB.

In a third aspect, a terminal device is provided, configured to perform the method in the above first aspect or any possible implementation of the first aspect. Specifically, the terminal device includes units for performing the method of the first aspect or the method in any possible implementation of the first aspect.

In a fourth aspect, a network device is provided, configured to perform the method in the above second aspect or any possible implementation of the second aspect. Specifically, the network device includes units for performing the method of the second aspect or the method in any possible implementation of the second aspect.

In a fifth aspect, a terminal device is provided, which includes a processor and a memory. The memory is configured to store a computer program, and the processor is configured to call and run the computer program stored in the memory to perform the method in the first aspect or in various implementation modes thereof.

In a sixth aspect, a network device is provided, which includes a processor and a memory. The memory is configured to store a computer program, and the processor is configured to call and run the computer program stored in the memory to perform the method in the second aspect or various implementation modes thereof.

In a seventh aspect, a chip is provided, and configured to implement the method in any one of the above first to second aspects or each implementation thereof.

Specifically, the chip includes a processor, which is configured to call and run a computer program from a memory to enable a device in which the chip is installed to perform the method in any one of the above first aspect and second aspect or in various implementations thereof.

In an eighth aspect, a computer readable storage medium is provided, which is configured to store a computer program, when the computer program is run on a computer, the computer is enabled to perform the method according to any one of the first and second aspects described above and various implementations thereof.

In a ninth aspect, a computer program product is provided, which includes computer program instructions, when the computer instructions are executed by a computer, the computer is enabled to perform the method according to any one of the first and second aspects described above and various implementations thereof.

In a tenth aspect, a computer program is provided, when the computer program is run on a computer, the computer is enabled to perform the method according to any one of the first and second aspects described above and various implementations thereof.

Based on the above technical solution, after an SSB is detected by a terminal device, the terminal device can determine a first number and a second number of the SSB, further determine a timing position of the SSB according to the first number, and determine a relationship between the SSB and other QCL according to the second number.

### Brief Description of Drawings

FIG. 1 is a schematic diagram of an application scenario according to an embodiment of the present application.
FIG. 2 is a schematic diagram of transmission of an SSB in an unlicensed spectrum.
FIG. 3 is a schematic diagram of an SSB time sequence and a QCL relationship.
FIG. 4 is a schematic diagram of SSB transmission based on the time sequence and the QCL relationship shown in FIG. 3.
FIG. 5 is a schematic diagram of a wireless communication method according to an embodiment of the present application.
FIG. 6 is a schematic diagram of a first number of an SSB according to an embodiment of the present application.
FIG. 7 is a schematic diagram of a wireless communication method for transmitting an SSB according to an embodiment of the present application.
FIG. 8 is a schematic diagram of another wireless communication method according to an embodiment of the present application.
FIG. 9 is a schematic block diagram of a terminal device according to an embodiment of the present application.
FIG. 10 is a schematic block diagram of a network device according to an embodiment of the present application.
FIG. 11 is a schematic block diagram of a communication device according to another embodiment of the present application.
FIG. 12 is a schematic block diagram of a chip according to an embodiment of the present application.
FIG. 13 is a schematic block diagram of a communication system according to an embodiment of the present application.

### Detailed Description

Technical solutions in embodiments of the present application will be described below with reference to the drawings in the embodiments of the present application. It is apparent that the embodiments described are just some embodiments of the present application, but not all embodiments of the present application. According to the embodiments of the present application, all other embodiments achieved by a person of ordinary skills in the art without paying an inventive effort are within the protection scope of the present application.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), an Advanced long term evolution (LTE-A) system, a New Radio (NR) system, an evolution system of NR system, an LTE-based access to unlicensed spectrum (LTE-U) system, an NR-based access to unlicensed spectrum (NR-U) system, a Universal Mobile Telecommunication System (UMTS), a Worldwide Interoperability for Microwave Access (WiMAX) communication system, Wireless Local Area Networks (WLAN), Wireless Fidelity (WiFi), a next generation communication system or other communication systems.

Generally speaking, a traditional communication system supports a limited number of connections and is easy to implement. However, with development of communication technology, the mobile communication system will not only support traditional communication, but also support, for example, Device to Device (D2D) communication, Machine to Machine (M2M) communication, Machine Type Communication (MTC), Vehicle to Vehicle (V2V) communication, etc., and the embodiments of the present application may also be applied to these communication systems.

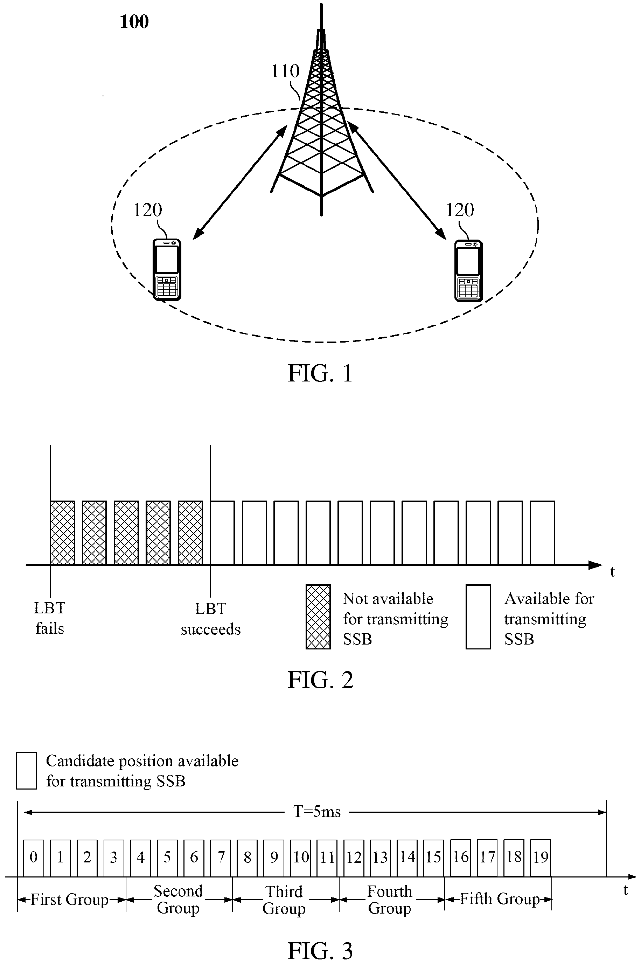

Illustratively, a communication system 100 in which an embodiment of the present application is applied is shown as FIG. 1. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or CDMA system, a NodeB (NB) in a WCDMA system, an Evolutional Node B (eNB or eNodeB) in an LTE system, or a radio controller in a Cloud Radio Access Network (CRAN), or the network device may be a mobile switch center, a relay station, an access point, a vehicle-mounted device, a wearable device, a hub, a switch, a bridge, a router, or a network side device in a 5G network, or a network device in a future evolved Public Land Mobile Network (PLMN), etc.

The communication system 100 also includes at least one terminal device 120 located within the coverage area of the network device 110. As used herein, the term "terminal device" includes, but is not limited to, a device configured to receive/send a communication signal via a wired circuit, for example, via a Public Switched Telephone Network (PSTN), a Digital Subscriber Line (DSL), a digital cable, a direct cable; and/or another data connection/network; and/or via a wireless interface, for instance, for a cellular network, a Wireless Local Area Network (WLAN), a digital television network such as a Digital Video Broadcasting-Handheld (DVB-H) network, a satellite network, or an AM-FM broadcast transmitter; and/or another terminal device; and/or an Internet of Things (IoT) device. A terminal device configured to communicate via a wireless interface may be referred to as a "wireless communication terminal", a "wireless terminal" or a "mobile terminal". Examples of the mobile terminal include, but not limited to, a satellite or cellular telephone, a Personal Communication System (PCS) terminal capable of combining a cellular wireless telephone and data processing, faxing and data communication abilities, a Personal Digital Assistant (PDA) that may include a radio telephone, a pager, an internet/intranet access, a Web browser, a memo pad, a calendar, and/or a Global Positioning System (GPS) receiver, and a conventional laptop and/or palmtop receiver or other electronic apparatus including a radio telephone transceiver. The terminal device may be referred to as an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device or a computing device with a wireless communication function, or other processing device connected to a wireless modem, a vehicle-mounted device, a wearable device, a terminal device in a 5G network, or a terminal device in a future evolved Public Land Mobile Network (PLMN), or the like.

Optionally, device to device (D2D) communication may be performed between the terminal devices 120.

Optionally, the 5G system or 5G network may be referred to as a New Radio (NR) system or an NR network.

FIG. 1 shows one network device and two terminal devices as an example. Optionally, the communication system 100 may include multiple network devices, and other quantities of terminal devices may be included within the coverage area of each network device, which is not limited in embodiments of the present application.

Optionally, the communication system 100 may include other network entities such as a network controller, and a mobile management entity, which is not limited in embodiments of the present application.

It should be understood that, a device with a communication function in a network/system in the embodiments of the present application may be referred to as a communication device. Taking the communication system 100 shown in FIG. 1 as an example, the communication devices may include a network device 110 and a terminal device 120 which have communication functions, and the network device 110 and the terminal device 120 may be the specific devices described above, which will not be described here again. The communication device may also include other devices in the communication system 100, such as a network controller, a mobile management entity, and other network entities, which is not limited in the embodiments of the present application.

It should be understood that the terms "system" and "network" are often used interchangeably here. The term "and/or" in this document is merely an association relationship describing associated objects, indicating that there may be three relationships, for example, A and/or B may indicate three cases: A alone, both of A and B, and B alone. In addition, the symbol "/" in this document generally indicates that objects before and after the symbol "/" have an "or" relationship.

The method according to an embodiment of the present application may be applied not only to communication on an unlicensed spectrum, but also to other communication scenarios, such as a communication scenario on a licensed spectrum.

Since channel resources in an unlicensed spectrum are shared, and when using these shared resources, a communication device needs to detect an idle channel before using the channel, in this case, it is difficult to ensure sending and receiving a synchronization signal block periodically at a fixed position. Because a timing position for a sending terminal device with LBT success is unpredictable, a LBT failure is very likely to cause a failure in sending and receiving a synchronization signal block.

In an NR-U system, considering that multiple candidate positions of SSB are provided, after a LBT success, there are still enough candidate positions of SSB that can be used to send an SSB, and accordingly, the influence of a LBT failure on SSB reception is avoided. In an implementation mode, Y SSB candidate positions may be pre-configured, and at most X SSBs can be transmitted at the Y SSB candidate positions for transmission, wherein X is less than Y, and SSBs can only be sent after a sending device obtains an available channel, as shown in FIG. 2. However, following issues would occur based on this solution.

Firstly, because there are many candidate positions of SSB in a time unit, a UE does not know a position of an SSB in the whole system timing after the SSB is detected by the UE, which may cause the UE to obtain a wrong system timing due to timing confusion between SSBs.

Secondly, the UE does not know the QCL relationship between the received SSBs, and it cannot filter the SSBs with the QCL relationship, and a measurement result at a beam level will affect the system performance.

As for the above problems, in an implementation, it can be determined that there are Y candidate positions of SSBs in a time unit, and when sending an SSB at each SSB candidate position, the SSB has a number, and every L SSB candidate positions form a group, where L is the maximum number of SSBs that can be transmitted.

Optionally, in an embodiment of this application, an SSB may be sent periodically, and as an example but not limitation, the SSB period may be 5ms, 10ms, 20ms, 40ms, 80ms or 160ms etc..

For example, it can be determined that there are 20 SSB candidate positions within 5ms, and the SSB number at each SSB candidate position is from 0 to 19 in turn. It can be further determined that every four SSB candidate positions (i.e., L=4) form a group, and then the 20 SSB candidate positions consist of five groups of SSB candidate positions, as shown in FIG. 3.

After the UE detects an SSB, it can obtain the number of the SSB and determine a relative time position of the SSB within a specific time unit T (for example, 5ms) according to the number of SSB. For example, in the example shown in FIG. 3, a candidate position available for transmitting an SSB within the time unit 5ms are predefined. After the UE detects an SSB, the UE can know which SSB that SSB is within the 5ms by obtaining the SSB number, and then the UE can determine the timing position of the SSB within 5ms.

In this implementation, the UE may consider that there is no QCL relationship between SSBs. For instance, there is no QCL relationship between the SSB transmitted at the first SSB candidate position (the number of the SSB being 1) and the SSB transmitted at the second SSB candidate position (the number of the SSB being 2).

In addition, the UE considers that there is a QCL relationship between SSBs with a same relative position within a same group. For example, when L=4, the UE considers that there is a QCL relationship between the SSB transmitted at the first SSB candidate position (the number of the SSB being 1) and the SSB transmitted at the fourth SSB candidate position (the number of the SSB being 4). That is to say, when the values obtained after the numbers of two SSBs modulo L are the same, the UE considers that there is a QCL relationship between these two SSBs.

That is to say, in this implementation, the sending positions of SSBs need to meet the QCL correspondence, that is, SSBs meeting the QCL relationship can only be sent or received at some fixed positions. For example, SSBs with the SSB number being 1 can only be sent at positions with the SSB numbers being 1, 5, 9, 13 and 17.

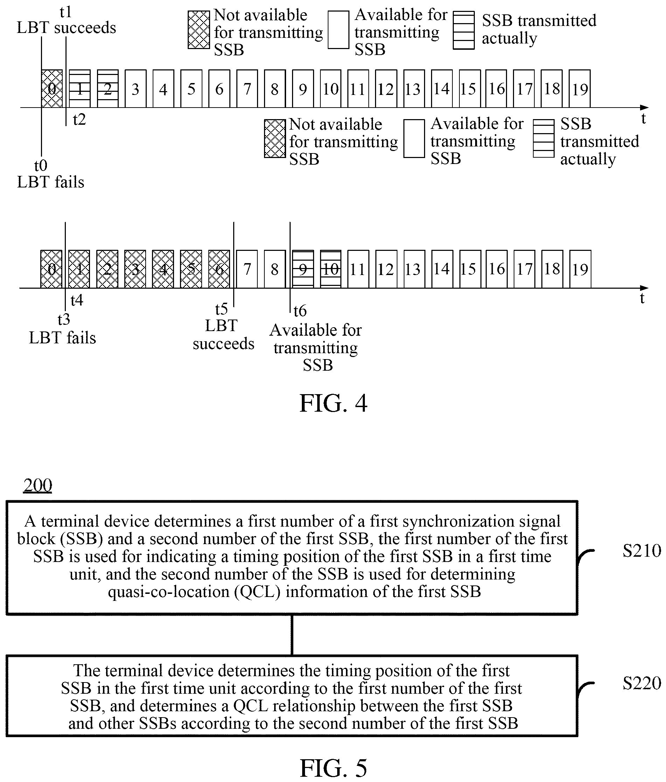

Therefore, the positions at which SSBs with a QCL hypothesis based on this solution can be sent/received are relatively limited. For example, as shown in FIG. 4, within the first time unit, e.g., within 5ms, after the network device succeeds in LBT at the time point t1 and obtains an available channel, the network device transmits the SSB carrying the SSB number 1 at the SSB candidate position corresponding to the time point t2.

In the next time unit, because the network device failed in LBT at the time point t3, the SSB with the SSB number being 1 could not be transmitted at the SSB candidate position corresponding to the time point t4. Then, even after the network device succeeds in LBT at the time point t5 and obtains the available channel, the network device could not directly utilize the SSB candidate position before the time point t6 to transmit an SSB which has a QCL relationship with an SSB with the SSB number being 1. The network device cannot use the corresponding SSB candidate position to transmit an SSB with the SSB number being 9 until the time point t6.

It can be seen that, in this implementation, although there are SSB candidate positions available for sending SSBs during the period from the time point t5 to the time point t6, these SSB candidate positions cannot be used because of the different QCL assumptions, resulting in resource waste. On the other hand, in the NR-U system, if the time-frequency resources between t5 and t6 are not occupied, other devices may perform LBT successfully in the time-frequency resources and occupy the channels, thereby affecting the SSB transmission after the time point t6.

In view of this, an embodiment of the present application provides a new indication way, which can be used for determining a QCL relationship and a transmission sequence of an SSB.

FIG. 5 is a schematic flow chart of a wireless communication method according to another embodiment of the present application. The method 200 may be performed by a network device in the communication system shown in FIG. 1. As shown in FIG. 5, the method 200 includes at least part of the acts S210 and S220.

In S210, a terminal device determines a first number of a first synchronization signal block (SSB) and a second number of the first SSB, wherein the first number of the first SSB is used for indicating a timing position of the first SSB in a first time unit, and the second number of the first SSB is used for determining quasi-co-location (QCL) information of the first SSB.

In S220, the terminal device determines the timing position of the first SSB in the first time unit according to the first number of the first SSB, and determines a QCL relationship between the first SSB and other SSBs according to the second number of the first SSB.

Therefore, in this embodiment, after receiving the SSB sent by a network device, the terminal device can determine the first number and the second number of the SSB, and further determine the timing position and the QCL relationship of the SSB in a specific time unit according to the first number and the second number of the SSB, so as to determine an actual sending position of the SSB in the system timing and the QCL relationship between the SSB and other SSBs. In addition, the SSBs with the QCL relationship can be further filtered as a measurement result at a beam level, which helps to improve the system performance.

Optionally, in an embodiment of the present application, an SSB includes at least one of the following signals: a Primary Synchronization Signal (PSS), a Secondary Synchronization Signal (SSS), and a Physical Broadcast Channel (PBCH).

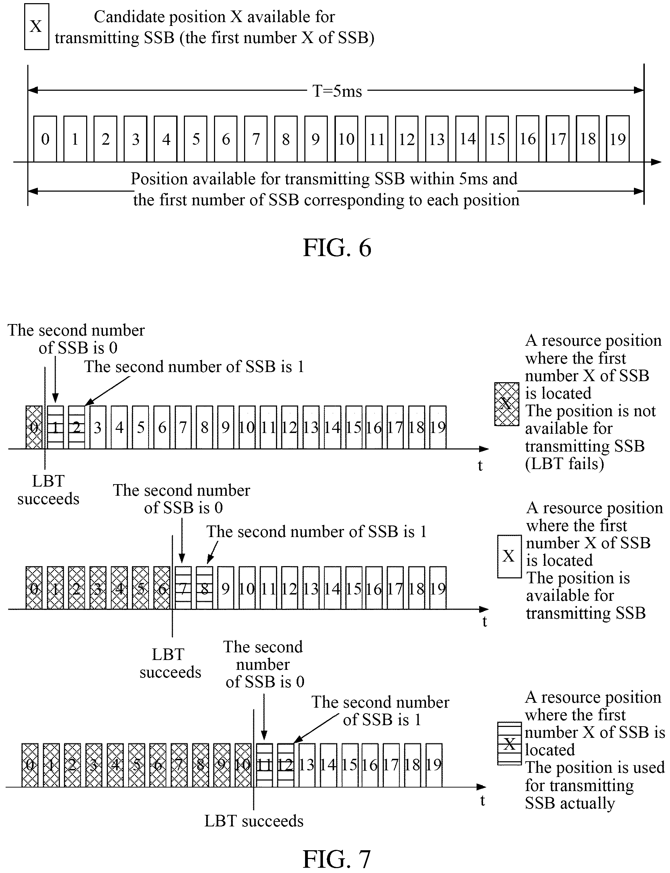

Optionally, in an embodiment of this application, there are Y candidate positions for transmitting an SSB within a specific time unit t, and when an SSB is transmitted at each candidate position, the SSB has a first number of SSB. For example, as shown in FIG. 6, there are 20 (i.e., Y=20) candidate positions of SSB within 5ms (i.e., T=5ms). When sending an SSB at each candidate position, the corresponding first number 0∼19 can be carried, so that a timing position of the SSB in the 5ms can be determined according to the first numbers of the SSB.

It should be noted that in an embodiment of the present application, the specific time unit T may be other time units, such as 4ms, 8ms, 10ms, and the number Y of SSB candidate positions within the specific time unit T can also be other values, such as 16, 24, 32. In other words, there can be 16 SSB candidate positions within 4ms, 32 SSB candidate positions within 8ms, or 32 SSB candidate positions within 5msl, and the embodiments of the present application are not limited thereto.

Optionally, in an embodiment of this application, the candidate positions of SSB within this specific time unit may be predefined, for example, the Y candidate positions for SSB transmission may be determined according to a protocol.

In this way, the terminal device can determine the first number of the SSB after the SSB is detected, then it can further determine a relative time position of the SSB in a specific time unit according to the first number of the SSB. For example, if the UE detects an SSB and the first number of the SSB is 12, the UE can determine the relative position of the SSB with the first number 12 within the 5ms, as shown in FIG. 6.

Optionally, in an embodiment of this application, the terminal device may determine the first number of the SSB according to the Demodulation Reference Signal (DMRS) sequence of the physical broadcast channel (PBCH) in the SSB and/or the content carried in the PBCH.

For example, the first number of the SSB may have K bits, where K is a positive integer. As an example, K1 bits of the K bits are carried in the information of the PBCH, and other K2 bits of the K bits are determined according to the DMRS sequence of the PBCH, where K, K1 are positive integers, K2 is an integer, and K1+K2 = K.

That is to say, the terminal device can receive the PBCH, further demodulate the PBCH, and obtain K1 bits in the first number from the content carried by the PBCH.

In an implementation, the K1 bits may be generated by a physical layer of a network device and further carried in the PBCH, that is, the physical layer of the network device may generate the K1 bits and further carry the K1 bits in the PBCH for transmission.

In another implementation, the K1 bits may also be generated by a higher layer (e.g., a Radio Resource Control (RRC) layer) of the network device, carried in a Master Information Block (MIB), and mapped to the PBCH.

That is to say, the higher layer of the network device can generate K1 bits, which are carried in the MIB and further mapped from the higher layer to PBCH for transmission.

Optionally, in some embodiments, the K1 bits are used for indicating the first number (i.e., K2 is zero), and in this case, the first number may all be carried in the information of the PBCH.

Optionally, in other embodiments, the K2 is greater than zero, and in this case, the K1 bits are the high K1 bits of the first number, or the low K1 bits of the first number. The other K2 bits of the first number may be determined by the DMRS sequence of the PBCH. As an example, the DMRS sequence and the K2 bits may have a corresponding relationship, and different values of the K2 bits are indicated by different DMRS sequences.

In some embodiments, K=3, K1=3, K2=0; or
K=4, K1=4, K2=0; or
K=5, K1=5, K2=0; or
K=6, K1=6, K2=0; or
K=4, K1=3, K2=1; or
K=5, K1=4, K2=1; or
K=6, K1=5 and K2=1.

That is to say, the first number of SSB may have 3 or 4 or 5 or 6 bits, which can be carried in the information of PBCH. Or, the first number of SSB may have 4 bits, wherein 3 bits can be carried in the information of PBCH, and the other one bit is determined according to the DMRS sequence of PBCH. Or, the first number of SSB may have 5 bits, wherein 4 bits are carried in the information of PBCH, and the other one bit is determined according to the DMRS sequence of PBCH. Or, the first number of SSB may have 6 bits, wherein 5 bits are carried in the information of PBCH, and the other one bit is determined according to the DMRS sequence of PBCH.

It should be understood that the above values of K, K1 and K2 are only examples, but should not constitute any limitation to the embodiments of this application. The values of K, K1 and K2 can be other values, such as K=6, K1=3, K2=3, etc. Embodiments of this application are not limited thereto.

In an embodiment of this application, after the terminal device detects an SSB, the terminal device can also determine the second number of the SSB, and further determine the QCL relationship of the SSB according to the second number of the SSB. Optionally, the terminal device can assume that SSBs with the same second number have a QCL relationship. In addition, SSBs with a QCL relationship can be combined and processed, for example, combined measurement or filtering is performed, which can improve system performance.

Optionally, in an embodiment of the present application, the terminal device may determine the second number of the SSB according to the DMRS sequence of the PBCH in the SSB.

For example, the DMRS sequence and the second number of the SSB may have a second correspondence relationship, that is, different DMRS sequences may be used for indicating different values of the second number of the SSB.

Optionally, there may be W second numbers of the SSB, and different values of the W second numbers may pass through W DMRS sequences.

For example, the W can be 8, and the value of the second number of SSB is 0 to 7. In this case, it can be indicated by 8 DMRS sequences.

In another example, the W can be 4, in this case it can be indicated by 4 DMRS sequences or 8 DMRS sequences, for example, every two DMRS sequences indicate a value of the W SSB second numbers.

In another example, the W can be 2, in this case it can be indicated by 2 DMRS sequences, or by 4 or 8 DMRS sequences, for example, every 2 or 4 DMRS sequences indicate a value of the W SSB second numbers.

Optionally, W can take other values, for example, 3 or 6, and the embodiments of this application are not limited thereto.

It should be noted that in an embodiment of the present application, the second number of SSB can also be indicated by other sequences, such as an SSS sequence or a PSS sequence, or a combination of multiple sequences, such as a combination of at least two of a DMRS sequence, a PSS sequence and a PSS sequence, which is not limited in the embodiments of the present application.

Similarly, K2 bits in the first number of SSB can also be indicated by other sequences, such as an SSS sequence or a PSS sequence, or a combination of multiple sequences, such as a combination of at least two of a DMRS sequence, a PSS sequence and a PSS sequence, which is not limited in the embodiments of the present application.

In an embodiment of this application, after succeeding in LBT and obtaining a channel use right at any time, the network device can transmit an SSB by using the nearest candidate position available for transmitting an SSB, without being limited by the QCL correspondence mentioned above, thus the problem that an SSB cannot be transmitted during a time interval between an LBT success time point and an SSB transmission available time point since the QCL correspondence fails, can be avoided.

With reference to FIG. 7, for example, a specific time unit is 5ms and there are 20 SSB candidate positions within the specific time unit, the transmission mode of SSB according to an embodiment of this application will be explained.

In a first time unit, the network device succeeds in LBT at the position where the first number of SSB is 1, thus the network device can transmit the SSB with the SSB second number being 0 at the position where the first number of SSB is 1, and further transmit other SSBs at subsequent timing positions.

In a second time unit, the network device succeeds in LBT at the position where the first number of SSB is 7, thus the network device can transmit the SSB with the SSB second number being 0 at the position where the first number of SSB is 7, and further transmit other SSBs at subsequent timing positions.

In a third time unit, the network device succeeds in LBT at the position where the first number of SSB is 11, thus the network device can transmit the SSB with the SSB second number being 0 at the position where the first number of SSB is 11, and further transmit other SSBs at subsequent timing positions.

Accordingly, the terminal device can receive SSBs at SSB candidate positions with different SSB first numbers, and these SSBs have the same second number. Since the terminal device assumes that SSBs with the same second number have a QCL relationship, the terminal device can measure and filter SSBs with the QCL relationship based on this assumption, and thus determine a corresponding measurement result.

Therefore, in the wireless communication method according to an embodiment of this application, the network device is not restricted by the QCL correspondence mentioned above, and can send an SSB at any SSB candidate position after succeeding in LBT. For example, the network device can transmit an SSB at the nearest candidate position available for transmitting an SSB after succeeding in LBT, the problem that channel resources between a starting position where a signal use right is obtained and a starting position where SSB transmission is available cannot be used effectively (that is, the problem mentioned above that resources between the time point t5 and the time point t6 cannot be utilized effectively), can be avoided. Therefore, the utilization efficiency of the system resources in the NR-U system is improved.

It should be understood that in the embodiments of the present application, the first numbers of SSBs with the same SSB second number may be different or the same, which is not limited by the embodiments of the present application.

For example, in the example of FIG. 7, if the network device succeeds in LBT at the position where the SSB first number is 1 in the second time unit, the network device can transmit an SSB with the SSB second number being 0 at the position where the SSB first number is 1. In this case, the two SSBs with the second number being 0 received in the first time unit and the second time unit have the same first number 1.

Optionally, in some embodiments, the method 200 further includes: the terminal device receives first configuration information sent by the network device, where the first configuration information is used for configuring at least one second number; the terminal device further measures SSBs with the at least one second number according to the first configuration information.

That is to say, the network device can configure the information of an SSB that the terminal device needs to measure. For example, the information of the SSB can be the second number of the SSB. In addition, the terminal device can only measure or filter the SSB with the second number based on the configured second number of the SSB to obtain a measurement result.

Optionally, the network device may send the first configuration information to the terminal device through broadcasting or higher layer signaling, such as RRC-specific signaling. As an example, the first configuration information may be carried in an RRC reconfiguration message.

Optionally, in some embodiments, the method 200 further includes: the terminal device receives second configuration information sent by the network device, where the second configuration information is used for configuring at least one first number; further, the terminal device receives the SSB at the timing position corresponding to the at least one first number; or the terminal device does not receive the SSB at the timing position corresponding to the at least one first number.

That is to say, the network device configures the information of an SSB that the terminal device needs to measure. For example, the information of the SSB may be the first number of the SSB. In addition, the terminal device may only receive the SSB at the timing position corresponding to the configured first number of the SSB based on the configured first number of the SSB, or does not receive the SSB at the timing position corresponding to the configured first number of the SSB. Then, the measurement or filtering can be performed based on the received SSB to obtain a measurement result.

For example, a specific time unit is 5ms, and there are 20 SSB candidate positions within 5ms, if the first number of the SSB configured by the second configuration information is 1∼10, then the terminal device can receive an SSB at a timing position with the first number of the SSB being 1∼10 or at a timing position with the first number of the SSB being 11∼19.

Optionally, the network device may send the second configuration information to the terminal device through broadcasting or higher layer signaling, such as RRC-specific signaling. As an example, the second configuration information may be carried in an RRC reconfiguration message.

Optionally, in some embodiments, the method 200 further includes: the terminal device receives third configuration information sent by the network device, where the third configuration information is used for determining a first time range; further, the terminal device receives an SSB within the first time range; or the terminal device does not receive an SSB within the first time range.

That is to say, the network device can configure the information of an SSB that the terminal device needs to measure. For example, the SSB information may be a time range. Further, the terminal device may receive an SSB only within the configured time range based on the configured time range by the UE, or not receive the SSB within the configured time range. Then, the measurement or filtering can be performed based on the received SSB to obtain a measurement result.

That is to say, the network device can configure the terminal device to receive SSBs at discrete timing positions, or can configure the terminal device to receive SSBs at continuous timing positions.

Optionally, the third configuration information may include starting position information and/or ending position information of an SSB, and the first time range may be determined according to the starting position information and/or the ending position information of an SSB.

Optionally, the third configuration information may also include a duration length of an SSB, and the duration length of the SSB may take an SSB candidate position as a unit.

Optionally, the starting position information of an SSB is a starting number position of the first number of the SSB, and the ending position information of SSB is an ending number position of the first number of the SSB; or, the starting position information of the SSB is a starting number position of the second number of the SSB, and the ending position information of the SSB is an ending number position of the second number of the SSB.

For example, a specific time unit is 5ms, and there are 20 SSB candidate positions within 5ms, if the first number configured by the third configuration information has a starting position of 1 and an ending position of 10, that is, the first time range is a time range with the first number being 1∼10, then the terminal device can receive an SSB at a timing position with the first number of the SSB being 1∼10 or at a timing position with the first number of the SSB being 1~19.

Optionally, the network device may send the third configuration information to the terminal device through broadcasting or higher layer signaling, such as RRC-specific signaling. As an example, the third configuration information may be carried in an RRC reconfiguration message.

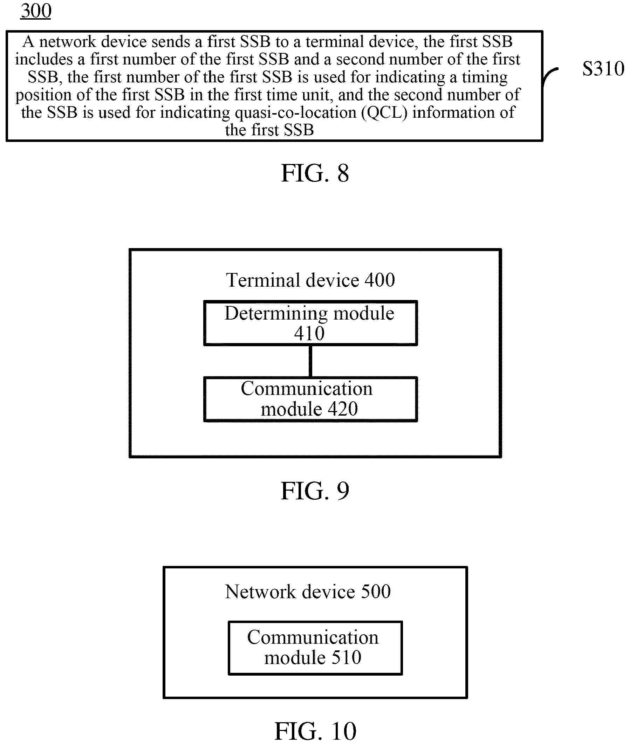

The wireless communication method according to an embodiment of the present application is described in detail above from a perspective of a terminal device in connection with FIGS. 2 to 7. Next, a wireless communication method according to another embodiment of the present application will be described in detail from a perspective of a network device in connection with FIG. 8. It should be understood that the description of the network device side corresponds to the description of the terminal device side, and the above description may be referred to for similar descriptions, which will not be repeated here to avoid repetition.

FIG. 8 is a schematic flow chart of a wireless communication method 300 according to another embodiment of the present application. The method 300 may be performed by the network device in the communication system shown in FIG. 1. As shown in FIG. 8, the method 300 includes S310.

In S310, a network device sends a first SSB to a terminal device, where the first SSB includes a first number of the first SSB and a second number of the first SSB.

The first number of the first SSB is used for indicating a timing position of the first SSB in the first time unit, and the second number of the SSB is used for indicating quasi-co-location (QCL) information of the first SSB.

Optionally, in some embodiments, information of the first number of the first SSB is carried by a demodulation reference signal (DMRS) sequence of a physical broadcast channel (PBCH) in the first SSB and/or the content in the PBCH.

Optionally, in some embodiments, the first number of the SSB has K bits, K1 bits of the K bits are carried in the information of the PBCH, and other K2 bits of the K bits are determined according to the DMRS sequence of the PBCH, where K, K1 are positive integers, K2 is an integer, and K1+K2 = K.

Optionally, in some embodiments, K=3, K1=3, K2 = 0; or
K=4, K1=4, K2 = 0; or
K=5, K1=5, K2=0; or
K=6, K1=6, K2=0; or
K=4, K1=3, K2=1; or
K=5, K1=4, K2=1; or
K=6, K1=5 and K2=1.

Optionally, in some embodiments, the K1 bits are used for indicating the first number, the high K1 bits of the first number, or the low K1 bits of the first number.

Optionally, in some embodiments, the K1 bits are generated by the physical layer of the network device and carried in the PBCH; or the K1 bits are generated by the higher layer of the network device, carried in a main information block (MIB), and mapped to the PBCH.

Optionally, in some embodiments, the DMRS sequence of the PBCH and the K2 bits of the K bits have a first correspondence relationship.

Optionally, in some embodiments, the DMRS sequence of the PBCH and the second number of the SSB have a second correspondence relationship.

Optionally, in some embodiments, there are W second numbers of the first SSB, and M bits are needed when expressed in binary, and M is a positive integer.

Optionally, in some embodiments, W is 2, 4, or 8, and M is 1, 2, or 3.

Optionally, in some embodiments, the method further includes: the network device sends a second SSB to the terminal device, wherein a second number of the second SSB is the same as the second number of the first SSB.

Optionally, in some embodiments, the first number of the first SSB is the same as the first number of the second SSB; or, the first number of the first SSB is different from the first number of the second SSB.

Optionally, in some embodiments, the method further includes: the network device sends first configuration information to the terminal device, where the first configuration information is used for configuring at least one second number.

Optionally, in some embodiments, the method further includes: the network device sends second configuration information to the terminal device, where the second configuration information is used for configuring at least one first number.

Optionally, in some embodiments, the method further includes: the network device sends third configuration information to the terminal device, where the third configuration information is used for determining a first time range.

Optionally, in some embodiments, the third configuration information includes starting position information and/or ending position information of the SSB.

Optionally, in some embodiments, the starting position information of the SSB is a starting number position of the first number of the SSB, and the ending position information of the SSB is an ending number position of the first number of the SSB; or, the starting position information of the SSB is a starting number position of the second number of the SSB, and the ending position information of the SSB is an ending number position of the second number of the SSB.

Method embodiments of the present application are described in detail above with reference to FIGS. 2 to 8, apparatus embodiments of the present application are described in detail below with reference to FIGS. 9 to 13. It should be understood that the apparatus embodiments and the method embodiments correspond to each other, and description of the method embodiments may be referred to for similar description of the apparatus embodiments.

FIG. 9 is a schematic block diagram of a terminal device 400 according to an embodiment of the present application. As shown in FIG. 9, the terminal device 400 includes: a determining module 410.

The determining module 410 is configured to determine a first number and a second number of a first synchronization signal block (SSB), wherein the first number of the first SSB is used for indicating a timing position of the first SSB in a first time unit, and the second number of the SSB is used for determining quasi-co-location (QCL) information of the first SSB; and determine the timing position of the first SSB in the first time unit according to the first number of the first SSB, and determine a QCL relationship between the first SSB and other SSBs according to the second number of the first SSB.

Optionally, in some embodiments, the determining module 410 is specifically configured to: determine the first number of the first SSB according to a demodulation reference signal (DMRS) sequence of a physical broadcast channel (PBCH) in the first SSB and/or a content carried in the PBCH.

Optionally, in some embodiments, the first number of the first SSB has K bits, K1 bits of the K bits are carried in information of the PBCH, and other K2 bits of the K bits are determined according to the DMRS sequence of the PBCH, where K, K1 are positive integers, K2 is an integer, and K1+K2=K.

Optionally, in some embodiments, K=3, K1=3, K2 = 0; or
K=4, K1=4, K2=0; or
K=5, K1=5, K2=0; or
K=6, K1=6, K2=0; or
K=4, K1=3, K2=1; or
K=5, K1=4, K2=1; or
K=6, K1=5 and K2=1

Optionally, in some embodiments, the K1 bits are used for indicating the first number, the high K1 bits of the first number, or the low K1 bits of the first number.

Optionally, in some embodiments, the K1 bits are generated by the physical layer of a network device and carried in the PBCH; or the K1 bits are generated by the higher layer of the network device, carried in a main information block (MIB), and mapped to the PBCH.

Optionally, in some embodiments, the DMRS sequence and the K2 bits of the K bits have a first correspondence relationship.

Optionally, in some embodiments, the determining module 410 is specifically configured to: determine the second number of the SSB according to the DMRS sequence of the PBCH in the first SSB.

Optionally, in some embodiments, the determining module 410 is specifically configured to: determine, by the terminal device, the second number of the SSB according to the DMRS sequence of the PBCH in the first SSB and a second correspondence relationship, wherein the second correspondence relationship is a correspondence relationship between multiple DMRS sequences and multiple second numbers.

Optionally, in some embodiments, there are W second numbers of the first SSB, and M bits are needed when expressed in binary, and M is a positive integer.

Optionally, in some embodiments, W is 2, 4, or 8, and M is 1, 2, or 3.

Optionally, in some embodiments, the determining module 410 is further configured to: determine a first number of a second SSB and a second number of the second SSB.

Optionally, in some embodiments, the determining module 410 is specifically configured to: determine a QCL relationship between the first SSB and the second SSB according to the second number of the first SSB and the second number of the second SSB.

Optionally, in some embodiments, the determining module 410 is specifically configured to: determine that the first SSB and the second SSB are of QCL if the second number of the first SSB and the second number of the second SSB are the same.

Optionally, in some embodiments, the first number of the first SSB is the same as the first number of the second SSB; or, the first number of the first SSB is different from the first number of the second SSB.

Optionally, in some embodiments, the terminal device 400 further includes: a communication module 420, which is configured to receive first configuration information sent by the network device, where the first configuration information is used for configuring at least one second number.

Optionally, in some embodiments, the terminal device 400 further includes: a processing module, which is configured to measure the SSB with the at least one second number according to the first configuration information.

Optionally, in some embodiments, the terminal device 400 further includes: a communication module 420, which is configured to receive second configuration information sent by the network device, where the second configuration information is used for configuring at least one first number.

Optionally, in some embodiments, the communication module 420 is further configured to: receive an SSB at a timing position corresponding to the at least one first number; or not to receive an SSB at the timing position corresponding to the at least one first number.

Optionally, in some embodiments, the terminal device 400 further includes: a communication module 420, which is configured to receive third configuration information sent by the network device, where the third configuration information is used for determining a first time range.

Optionally, in some embodiments, the communication module 420 is further configured to receive an SSB within the first time range; or not to receive an SSB within the first time range.

Optionally, in some embodiments, the third configuration information includes starting position information and/or ending position information of the SSB.

Optionally, in some embodiments, the starting position information of the SSB is a starting number position of the first number of the SSB, and the ending position information of the SSB is an ending number position of the first number of the SSB; or, the starting position information of the SSB is a starting number position of the second number of the SSB, and the ending position information of the SSB is an ending number position of the second number of the SSB.

It should be understood that the terminal device 400 according to an embodiment of the present application may correspond to the terminal device in a method embodiment of the present application, and the above-mentioned and other operations and/or functions of various units in the terminal device 400 are respectively for implementing the corresponding flows of the terminal device in the method 200 as shown in FIG. 5, which will not be repeated here for brevity.

FIG. 10 is a schematic block diagram of a network device according to an embodiment of the present application. The network device 500 in FIG. 10 includes a communication module 510.

The communication module 510 is configured to send a first SSB to the terminal device, where the first SSB includes a first number of the first SSB and a second number of the first SSB.

The first number of the first SSB is used for indicating a timing position of the first SSB in the first time unit, and the second number of the SSB is used for indicating quasi-co-location (QCL) information of the first SSB.

Optionally, in some embodiments, information of the first number of the first SSB is carried by a demodulation reference signal (DMRS) sequence of a physical broadcast channel (PBCH) in the first SSB and/or a content in the PBCH.

Optionally, in some embodiments, the first number of the SSB has K bits, K1 bits of the K bits are carried in information of the PBCH, and other K2 bits of the K bits are determined according to the DMRS sequence of the PBCH, where K, K1 are positive integers, K2 is an integer, and K1+K2=K.

Optionally, in some embodiments, K=3, K1=3, K2 = 0; or
K=4, K1=3, K2=1; or
K=5, K1=4, K2=1; or
K=6, K1=5 and K2=1.

Optionally, in some embodiments, the K1 bits are used for indicating the first number, the high K1 bits of the first number, or the low K1 bits of the first number.

Optionally, in some embodiments, the K1 bits are generated by a physical layer of the network device and carried in the PBCH; or the K1 bits are generated by the higher layer of the network device, carried in a main information block (MIB), and mapped to the PBCH.

Optionally, in some embodiments, the DMRS sequence of the PBCH and the K2 bits of the K bits have a first correspondence relationship.

Optionally, in some embodiments, the DMRS sequence of the PBCH and the second number of the SSB have a second correspondence relationship.

Optionally, in some embodiments, there are W second numbers of the first SSB, and M bits are needed when expressed in binary, and M is a positive integer.

Optionally, in some embodiments, W is 2, 4, or 8, and M is 1, 2, or 3.

Optionally, in some embodiments, the communication module 510 is further configured to: send a second SSB to the terminal device, wherein a second number of the second SSB is the same as the second number of the first SSB.

Optionally, in some embodiments, the first number of the first SSB is the same as the first number of the second SSB; or, the first number of the first SSB is different from the first number of the second SSB.

Optionally, in some embodiments, the communication module 510 is further configured to: send first configuration information to the terminal device, where the first configuration information is used for configuring at least one second number.

Optionally, in some embodiments, the communication module 510 is further configured to send second configuration information to the terminal device, where the second configuration information is used for configuring at least one first number.

Optionally, in some embodiments, the communication module 510 is further configured to send third configuration information to the terminal device, where the third configuration information is used for determining a first time range.

Optionally, in some embodiments, the third configuration information includes starting position information and/or ending position information of the SSB.

Optionally, in some embodiments, the starting position information of the SSB is a starting number position of the first number of the SSB, and the ending position information of the SSB is an ending number position of the first number of the SSB; or, the starting position information of the SSB is a starting number position of the second number of the SSB, and the ending position information of the SSB is an ending number position of the second number of the SSB.

It should be understood that the network device 500 according to an embodiment of the present application may correspond to the terminal device in a method embodiment of the present application, and the above-mentioned and other operations and/or functions of various units in the network device 500 are respectively for implementing the corresponding flows of the network device in the method 300 as shown in FIG. 8, which will not be repeated here for brevity.

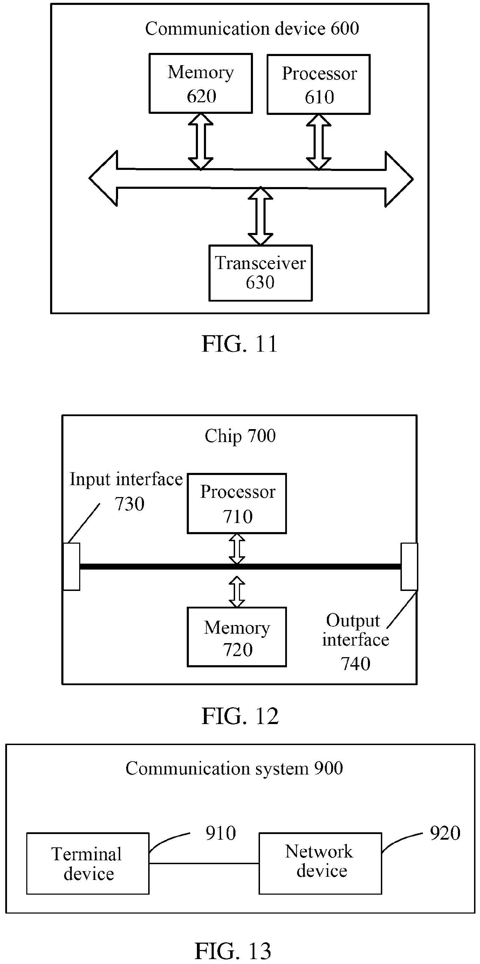

FIG. 11 is a schematic diagram of a structure of a communication device 600 according to an embodiment of the present application. The communication device 600 shown in FIG. 11 includes a processor 610, which may call and run a computer program from a memory to implement the methods according to the embodiments of the present application.

Optionally, as shown in FIG. 11, the communication device 600 may further include the memory 620. The processor 610 may call and run a computer program from the memory 620 to implement the methods in the embodiments of the present application.

The memory 620 may be a separate device independent of the processor 610 or may be integrated in the processor 610.

Optionally, as shown in FIG. 11, the communication device 600 may further include a transceiver 630, and the processor 610 may control the transceiver 630 to communicate with other devices. Specifically, the transceiver 730 may send information or data to other devices or receive information or data sent by other devices.

The transceiver 630 may include a transmitter and a receiver. The transceiver 630 may further include an antenna, and the number of antennas may be one or more.

Optionally, the communication device 600 may be specifically a network device of an embodiment of the present application, and the communication device 600 may implement the corresponding processes implemented by the network device in various methods of the embodiments of the present application, which will not be repeated here for brevity.

Optionally, the communication device 600 may specifically be a mobile terminal/terminal device of an embodiment of the present application, and the communication device 600 may implement the corresponding processes implemented by the mobile terminal/terminal device in various methods of the embodiments of the present application, which will not be repeated here for brevity.

FIG. 12 is a schematic diagram of structure of a chip of an embodiment of the present application. A chip 700 shown in FIG. 12 includes a processor 710. The processor 710 may call and run a computer program from a memory to implement a method in an embodiment of the present application.

Optionally, as shown in FIG. 12, the chip 700 may further include a memory 720. The processor 710 may call and run a computer program from the memory 720 to implement the methods in the embodiments of the present application.

The memory 720 may be a separate device independent of the processor 710 or may be integrated in the processor 710.

Optionally, the chip 700 may further include an input interface 730. The processor 710 may control the input interface 730 to communicate with other devices or chips, and specifically, may acquire information or data sent by other devices or chips.

Optionally, the chip 700 may further include an output interface 740. The processor 710 may control the output interface 740 to communicate with other devices or chips, and specifically, may output information or data to other devices or chips.

Optionally, the chip may be applied to a network device in an embodiment of the present application, and the chip may implement the corresponding processes implemented by the network device in various methods of the embodiments of the present application, which will not be repeated here for brevity.

Optionally, the chip may be applied to a mobile terminal/terminal device in an embodiment of the present application, and the chip may implement the corresponding processes implemented by the mobile terminal/terminal device in various methods of the embodiments of the present application, which will not be repeated here for brevity.

It should be understood that the chip mentioned in the embodiments of the present application may be referred to as a system-level chip, a system chip, a chip system or a system-on-chip, etc.

FIG. 13 is a schematic block diagram of a communication system 900 according to an embodiment of the present application. As shown in FIG. 13, the communication system 900 may include a terminal device 910 and a network device 920.

Herein, the terminal device 910 may be configured to implement corresponding functions implemented by the terminal device in the above-mentioned methods, and the network device 920 may be configured to implement corresponding functions implemented by the network device in the above-mentioned methods, which will not be repeated here for brevity.

It should be understood that the processor in the embodiments of the present application may be an integrated circuit chip having a signal processing capability. In an implementation process, the acts of the foregoing method embodiments may be implemented by an integrated logic circuit of hardware in the processor or instructions in a form of software. The processor may be a general purpose processor, a Digital Signal Processor (DSP), an Application Specific Integrated Circuit (ASIC), a Field Programmable Gate Array (FPGA) or other programmable logic devices, a discrete gate or a transistor logic device, or a discrete hardware component. The processor may implement or perform various methods, acts and logical block diagrams disclosed in the embodiments of the present application. The general purpose processor may be a microprocessor, or the processor may be any conventional processor or the like. The acts of the methods disclosed in combination with the embodiments of the present application may be directly embodied to be implemented by a hardware decoding processor, or may be implemented by a combination of hardware and software modules in the decoding processor. The software modules may be located in a storage medium commonly used in the art, such as a random access memory, a flash memory, a read-only memory, a programmable read-only memory or an electrically erasable programmable memory, or a register. The storage medium is located in a memory, and the processor reads the information in the memory and completes the acts of the above methods in combination with its hardware.

It may be understood that the memory in the embodiments of the present application may be a volatile memory or a non-volatile memory, or may include both a volatile memory and a non-volatile memory. The non-transitory memory may be a Read-Only Memory (ROM), a Programmable ROM (PROM), an Erasable PROM (EPROM), an Electrically EPROM (EEPROM), or a flash memory. The volatile memory may be a Random Access Memory (RAM) which serves as an external cache. By way of exemplary but not restrictive illustrations, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory in the systems and methods described here is intended to include, but is not limited to, these and any other suitable types of memory.

It should be understood that the foregoing memory is an example for illustration, but not for limiting. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), or the like. That is, memories in the embodiments of the present application are intended to include, but is not limited to, these and any other suitable types of memories.

An embodiment of the present application further provides a computer readable storage medium configured to store a computer program.

Optionally, the computer readable storage medium may be applied to a network device in an embodiment of the present application, and the computer program enables a computer to perform the corresponding processes implemented by the network device in various methods of the embodiments of the present application, which will not be repeated here for brevity.

Optionally, the computer readable storage medium may be applied to a mobile terminal/terminal device in an embodiment of the present application, and the computer program enables a computer to perform the corresponding processes implemented by the mobile terminal/terminal device in various methods of the embodiments of the present application, which will not be repeated here for brevity.

An embodiment of the present application also provides a computer program product including computer program instructions.

Optionally, the computer program product may be applied to a network device in an embodiment of the present application, and the computer program instructions enable a computer to perform the corresponding processes implemented by the network device in various methods of the embodiments of the present application, which will not be repeated here for brevity.

Optionally, the computer program product may be applied to a mobile terminal/terminal device in an embodiment of the present application, and the computer program instructions enable a computer to perform the corresponding processes implemented by the mobile terminal/terminal device in various methods of the embodiments of the present application, which will not be repeated here for brevity.

An embodiment of the present application also provides a computer program.

Optionally, the computer program may be applied to the network device of the embodiments of the present application. When the computer program is run on a computer, the computer is enabled to perform corresponding processes implemented by the network device in various methods of the embodiments of the present application, which will not be repeated here for brevity.

Optionally, the computer program may be applied to a mobile terminal/terminal device in an embodiment of the present application. When the computer program is run on a computer, the computer is enabled to perform the corresponding processes implemented by the mobile terminal/terminal device in various methods of the embodiments of the present application, which will not be repeated here for brevity.

Those of ordinary skills in the art may recognize that the example units and algorithm acts described in combination with the embodiments disclosed herein may be implemented in electronic hardware, or a combination of computer software and electronic hardware. Whether these functions are implemented in hardware or software depends on a specific application and design constraints of the technical solutions. Professional technicians may use different methods to implement the described functions in respect to each particular application, but such implementation should not be considered to be beyond the scope of the present application.

Those skilled in the art may clearly understand that for convenience and conciseness of description, as to the specific working processes of the systems, apparatuses and units described above, reference may be made to the corresponding processes in the method embodiments, which will not be repeated here.

In several embodiments provided by the present application, it should be understood that the disclosed systems, apparatuses and methods may be implemented in other ways. For example, the apparatus embodiments described above are only illustrative, for example, the division of the units is only a logical function division, and there may be other division modes in an actual implementation, for example, multiple units or components may be combined or integrated into another system, or some features may be ignored or not executed. On the other hand, the discussed or displayed mutual coupling or direct coupling or communication connection may be indirect coupling or communication connection between apparatuses or units through some interfaces, which may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the objects of the solutions of the embodiments.

In addition, various functional units in various embodiments of the present application may be integrated in one processing unit, or the various units may be physically present separately, or two or more units may be integrated in one unit.

When the functions are implemented in the form of software functional units and sold or used as an independent product, the software functional units may be stored in a computer readable storage medium. Based on such understanding, the technical solution of the present application, in essence, or the part contributing to the prior art, or the part of the technical solution, may be embodied in the form of a software product stored in a storage medium. The computer software product is stored in a storage medium and includes several instructions for instructing a computer device (which may be a personal computer, a server, or a network device and the like) to perform all or part of the acts of the methods described in various embodiments of the present application. The storage medium includes any medium that can store program codes, such as a USB flash disk, a removable hard disk, a Read-Only Memory (ROM), a Random Access Memory (RAM), a magnetic disk, or an optical disk.

The foregoing descriptions are merely specific embodiments of the present application, but the protection scope of the present application is not limited thereto. Any variation or substitution that may be readily conceived by a person skilled in the art within the technical scope disclosed by the present application shall fall within the protection scope of the present application. Therefore, the protection scope of the present application shall be subjected to the protection scope of the claims.

## Claims

1. A wireless communication method, comprising:
determining, by a terminal device, a first number of a first synchronization signal block (SSB) and a second number of the first SSB, wherein the first number of the first SSB is used for indicating a timing position of the first SSB in a first time unit, and the second number of the first SSB is used for determining quasi-co-location (QCL) information of the first SSB; and
determining, by the terminal device, the timing position of the first SSB in the first time unit according to the first number of the first SSB, and determining a QCL relationship between the first SSB and other SSBs according to the second number of the first SSB.

2. The method of claim 1, wherein determining, by the terminal device, the first number of the first synchronization signal block (SSB) and the second number of the first SSB, comprises:
determining, by the terminal device, the first number of the first SSB according to a demodulation reference signal (DMRS) sequence of a physical broadcast channel (PBCH) in the first SSB and/or a content carried in the PBCH.

3. The method of claim 2, wherein the first number of the first SSB has K bits, K1 bits of the K bits are carried in information of the PBCH, and other K2 bits of the K bits are determined according to the DMRS sequence of the PBCH, where K, K1 are positive integers, K2 is an integer, and K1+K2 = K.

4. The method of claim 3, wherein
K=3, K1=3, K2=0; or
K=4, K1=4, K2=0; or
K=5, K1=5, K2=0; or
K=6, K1=6, K2=0; or
K=4, K1=3, K2=1; or
K=5, K1=4, K2=1; or
K=6, K1=5 and K2=1.

5. The method of claim 3 or 4, wherein the K1 bits are used for indicating the first number, high K1 bits of the first number, or low K1 bits of the first number.

6. The method of any one of claims 3 to 5, wherein
the K1 bits are generated by a physical layer of a network device and carried in the PBCH; or
the K1 bits are generated by a higher layer of the network device, carried in a main information block (MIB), and mapped to the PBCH.

7. The method of any one of claims 3 to 6, wherein the DMRS sequence and the K2 bits of the K bits have a first correspondence relationship.

8. The method of any one of claims 1 to 7, wherein determining, by the terminal device, the first number of the first synchronization signal block (SSB) and the second number of the first SSB, comprises:
determining, by the terminal device, the second number of the SSB according to the DMRS sequence of the PBCH in the first SSB.

9. The method of claim 8, wherein determining, by the terminal device, the second number of the SSB according to the DMRS sequence of the PBCH in the first SSB, comprises:
determining, by the terminal device, the second number of the SSB according to the DMRS sequence of the PBCH in the first SSB and a second correspondence relationship, wherein the second correspondence relationship is a correspondence relationship between a plurality of DMRS sequences and a plurality of second numbers.

10. The method of any one of claims 1 to 9, wherein the second number of the first SSB has M bits, and M is a positive integer.

11. The method of claim 10, wherein M is 1, 2, or 3.

12. The method of any one of claims 1 to 11, further comprising:
determining, by the terminal device, a first number of a second SSB and a second number of the second SSB.

13. The method of claim 12, wherein determining a QCL relationship between the first SSB and other SSBs according to the second number of the first SSB, comprises:
determining, by the terminal device, a QCL relationship between the first SSB and the second SSB according to the second number of the first SSB and the second number of the second SSB.

14. The method of claim 13, wherein determining, by the terminal device, the QCL relationship between the first SSB and the second SSB according to the second number of the first SSB and the second number of the second SSB, comprises:
determining, by the terminal device, that the first SSB and the second SSB are of QCL if the second number of the first SSB and the second number of the second SSB are the same.

15. The method of claim 14, wherein the first number of the first SSB is the same as the first number of the second SSB; or, the first number of the first SSB is different from the first number of the second SSB.

16. The method of any one of claims 1 to 15, further comprising:
receiving, by the terminal device, first configuration information sent by the network device, where the first configuration information is used for configuring at least one second number.

17. The method of claim 16, further comprising:
measuring, by the terminal device, the SSB with the at least one second number according to the first configuration information.

18. The method of any one of claims 1 to 17, further comprising:
receiving, by the terminal device, second configuration information sent by the network device, where the second configuration information is used for configuring at least one first number.

19. The method of claim 18, further comprising:
receiving, by the terminal device, an SSB at a timing position corresponding to the at least one first number; or
not receiving, by the terminal device, an SSB at the timing position corresponding to the at least one first number.

20. The method of any one of claims 1 to 19, further comprising:
receiving, by the terminal device, third configuration information sent by the network device, where the third configuration information is used for determining a first time range.

21. The method of claim 20, further comprising:
receiving, by the terminal device, an SSB within the first time range; or
not receiving, by the terminal device, an SSB within the first time range.

22. The method of claim 20 or 21, wherein the third configuration information comprises starting position information and/or ending position information of the SSB.

23. The method of claim 22, wherein
the starting position information of the SSB is a starting number position of the first number of the SSB, and the ending position information of the SSB is an ending number position of the first number of the SSB; or,
the starting position information of the SSB is a starting number position of the second number of the SSB, and the ending position information of the SSB is an ending number position of the second number of the SSB.

24. A wireless communication method, comprising:
sending, by a network device, a first synchronization signal block (SSB) to a terminal device, where the first SSB comprises a first number of the first SSB and a second number of the first SSB;
wherein the first number of the first SSB is used for indicating a timing position of the first SSB in the first time unit, and the second number of the SSB is used for indicating quasi-co-location (QCL) information of the first SSB.

25. The method of claim 24, wherein information of the first number of the first SSB is carried by a demodulation reference signal (DMRS) sequence of a physical broadcast channel (PBCH) in the first SSB and/or a content in the PBCH.

26. The method of claim 24 or 25, wherein the first number of the SSB has K bits, K1 bits of the K bits are carried in information of the PBCH, and other K2 bits of the K bits are determined according to the DMRS sequence of the PBCH, where K, K1 are positive integers, K2 is an integer, and K1+K2 = K.

27. The method of claim 26, wherein
K=3, K1=3, K2=0; or
K=4, K1=4, K2=0; or
K=5, K1=5, K2=0; or
K=6, K1=6, K2=0; or
K=4, K1=3, K2=1; or
K=5, K1=4, K2=1; or
K=6, K1=5 and K2=1.

28. The method of claim 26 or 27, wherein the K1 bits are used for indicating the first number, high K1 bits of the first number, or low K1 bits of the first number.

29. The method of any one of claims 26 to 28, wherein
the K1 bits are generated by a physical layer of the network device and carried in the PBCH; or
the K1 bits are generated by a higher layer of the network device, carried in a main information block (MIB), and mapped to the PBCH.

30. The method of any one of claims 26 to 29, wherein the DMRS sequence of the PBCH and the K2 bits of the K bits have a first correspondence relationship.

31. The method of any one of claims 24 to 30, wherein the DMRS sequence of the PBCH and the second number of the SSB have a second correspondence relationship.

32. The method of any one of claims 24 to 31, wherein the second number of the first SSB has M bits, and M is a positive integer.

33. The method of claim 32, wherein M is 1, 2, or 3.

34. The method of any one of claims 24 to 33, further comprising:
sending, by the network device, a second SSB to the terminal device, wherein a second number of the second SSB is the same as the second number of the first SSB.

35. The method of claim 34, wherein the first number of the first SSB is the same as the first number of the second SSB; or, the first number of the first SSB is different from the first number of the second SSB.

36. The method of any one of claims 24 to 35, further comprising:
sending, by the network device, first configuration information to the terminal device, where the first configuration information is used for configuring at least one second number.

37. The method of any one of claims 24 to 36, further comprising:
sending, by the network device, second configuration information to the terminal device, where the second configuration information is used for configuring at least one first number.

38. The method of any one of claims 24 to 37, further comprising:
sending, by the network device, third configuration information to the terminal device, where the third configuration information is used for determining a first time range.

39. The method of claim 38, wherein the third configuration information comprises starting position information and/or ending position information of the SSB.

40. The method of claim 39, wherein the starting position information of the SSB is a starting number position of the first number of the SSB, and the ending position information of the SSB is an ending number position of the first number of the SSB; or,
the starting position information of the SSB is a starting number position of the second number of the SSB, and the ending position information of the SSB is an ending number position of the second number of the SSB.

41. A terminal device, comprising:
a determining module, configured to determine a first number of a first synchronization signal block (SSB) and a second number of the first SSB, wherein the first number of the first SSB is used for indicating a timing position of the first SSB in a first time unit, and the second number of the SSB is used for determining quasi-co-location (QCL) information of the first SSB; and
determine the timing position of the first SSB in the first time unit according to the first number of the first SSB, and determine a QCL relationship between the first SSB and other SSBs according to the second number of the first SSB.

42. The terminal device of claim 41, wherein the determining module is specifically configured to:
determine the first number of the first SSB according to a demodulation reference signal (DMRS) sequence of a physical broadcast channel (PBCH) in the first SSB and/or a content carried in the PBCH.

43. The terminal device of claim 42, wherein the first number of the first SSB has K bits, K1 bits of the K bits are carried in information of the PBCH, and other K2 bits of the K bits are determined according to the DMRS sequence of the PBCH, where K, K1 are positive integers, K2 is an integer, and K1+K2 = K.

44. The terminal device of claim 43, wherein
K=3, K1=3, K2=0; or
K=4, K1=4, K2=0; or
K=5, K1=5, K2=0; or
K=6, K1=6, K2=0; or
K=4, K1=3, K2=1; or
K=5, K1=4, K2=1; or
K=6, K1=5 and K2=1.

45. The terminal device of claim 43 or 44, wherein the K1 bits are used for indicating the first number, high K1 bits of the first number, or low K1 bits of the first number.

46. The terminal device of any one of claims 43 to 45, wherein
the K1 bits are generated by a physical layer of a network device and carried in the PBCH; or
the K1 bits are generated by a higher layer of the network device, carried in a main information block (MIB), and mapped to the PBCH.

47. The terminal device of any one of claims 43 to 46, wherein the DMRS sequence and the K2 bits of the K bits have a first correspondence relationship.

48. The terminal device of any one of claims 41 to 47, wherein the determining module is specifically configured to:
determine the second number of the SSB according to the DMRS sequence of the PBCH in the first SSB.

49. The terminal device of claim 48, wherein the determining module is specifically configured to:
determine, by the terminal device, the second number of the SSB according to the DMRS sequence of the PBCH in the first SSB and a second correspondence relationship, wherein the second correspondence relationship is a correspondence relationship between a plurality of DMRS sequences and a plurality of second numbers.

50. The terminal device of any one of claims 41 to 49, wherein the second number of the first SSB has M bits, and M is a positive integer.

51. The terminal device of claim 50, wherein M is 1, 2, or 3.

52. The terminal device of any one of claims 41 to 51, wherein the determination module is further configured to:
determine a first number of a second SSB and a second number of the second SSB.

53. The terminal device of claim 52, wherein the determining module is specifically configured to:
determine a QCL relationship between the first SSB and the second SSB according to the second number of the first SSB and the second number of the second SSB.

54. The terminal device of claim 53, wherein the determining module is specifically configured to:
determine that the first SSB and the second SSB are of QCL if the second number of the first SSB and the second number of the second SSB are the same.

55. The terminal device of claim 54, wherein the first number of the first SSB is the same as the first number of the second SSB; or, the first number of the first SSB is different from the first number of the second SSB.

56. The terminal device of any one of claims 41 to 55, further comprising:
a communication module, configured to receive first configuration information sent by the network device, where the first configuration information is used for configuring at least one second number.

57. The terminal device of claim 56, further comprising:
a processing module, configured to measure the SSB with the at least one second number according to the first configuration information.

58. The terminal device of any one of claims 41 to 57, further comprising:
a communication module, configured to receive second configuration information sent by the network device, where the second configuration information is used for configuring at least one first number.

59. The terminal device of claim 58, wherein the communication module is further configured to:
receive an SSB at a timing position corresponding to the at least one first number; or
not to receive an SSB at the timing position corresponding to the at least one first number.

60. The terminal device of any one of claims 41 to 59, further comprising:
a communication module, configured to receive third configuration information sent by the network device, where the third configuration information is used for determining a first time range.

61. The terminal device of claim 60, wherein the communication module is further configured to receive an SSB within the first time range; or not to receive an SSB within the first time range.

62. The terminal device of claim 60 or 61, wherein the third configuration information comprises starting position information and/or ending position information of the SSB.

63. The terminal device of claim 62, wherein
the starting position information of the SSB is a starting number position of the first number of the SSB, and the ending position information of the SSB is an ending number position of the first number of the SSB; or,
the starting position information of the SSB is a starting number position of the second number of the SSB, and the ending position information of the SSB is an ending number position of the second number of the SSB.

64. A network device, comprising:
a communication module, configure to send a first synchronization signal block (SSB) to a terminal device, where the first SSB comprises a first number of the first SSB and a second number of the first SSB;
wherein the first number of the first SSB is used for indicating a timing position of the first SSB in the first time unit, and the second number of the SSB is used for indicating quasi-co-location (QCL) information of the first SSB.

65. The network device of claim 64, wherein information of the first number of the first SSB is carried by a demodulation reference signal (DMRS) sequence of a physical broadcast channel (PBCH) in the first SSB and/or a content in the PBCH.

66. The network device of claim 64 or 65, wherein the first number of the SSB has K bits, K1 bits of the K bits are carried in information of the PBCH, and other K2 bits of the K bits are determined according to the DMRS sequence of the PBCH, where K, K1 are positive integers, K2 is an integer, and K1+K2 = K.

67. The network device of claim 66, wherein
K=3, K1=3, K2=0; or
K=4, K1=4, K2=0; or
K=5, K1=5, K2=0; or
K=6, K1=6, K2=0; or
K=4, K1=3, K2=1; or
K=5, K1=4, K2=1; or
K=6, K1=5 and K2=1.

68. The network device of claim 66 or 67, wherein the K1 bits are used for indicating the first number, high K1 bits of the first number, or low K1 bits of the first number.

69. The network device of any one of claims 66 to 68, wherein
the K1 bits are generated by a physical layer of the network device and carried in the PBCH; or
the K1 bits are generated by a higher layer of the network device, carried in a main information block (MIB), and mapped to the PBCH.

70. The network device of any one of claims 66 to 69, wherein the DMRS sequence of the PBCH and the K2 bits of the K bits have a first correspondence relationship.

71. The network device of any one of claims 64 to 70, wherein the DMRS sequence of the PBCH and the second number of the SSB have a second correspondence relationship.

72. The network device of any one of claims 64 to 71, wherein the second number of the first SSB has M bits, and M is a positive integer.

73. The network device of claim 72, wherein M is 1, 2, or 3.

74. The network device of any one of claims 64 to 73, wherein the communication module is further configure to send a second SSB to the terminal device, wherein a second number of the second SSB is the same as the second number of the first SSB.

75. The network device of claim 74, wherein the first number of the first SSB is the same as the first number of the second SSB; or, the first number of the first SSB is different from the first number of the second SSB.

76. The network device of any one of claims 64 to 75, wherein the communication module is further configured to:
send first configuration information to the terminal device, where the first configuration information is used for configuring at least one second number.

77. The network device of any one of claims 64 to 76, wherein the communication module is further configure to:
send second configuration information to the terminal device, where the second configuration information is used for configuring at least one first number.

78. The network device of any one of claims 64 to 77, wherein the communication module is further configured to:
send third configuration information to the terminal device, where the third configuration information is used for determining a first time range.

79. The network device of claim 78, wherein the third configuration information comprises starting position information and/or ending position information of the SSB.

80. The network device of claim 79, wherein the starting position information of the SSB is a starting number position of the first number of the SSB, and the ending position information of the SSB is an ending number position of the first number of the SSB; or,
the starting position information of the SSB is a starting number position of the second number of the SSB, and the ending position information of the SSB is an ending number position of the second number of the SSB.

81. A terminal device, comprising: a processor and a memory, wherein the memory is configured to store a computer program, and the processor is configured to call and run the computer program stored in the memory to perform the method of any one of claims 1 to 23.

82. A chip, comprising: a processor, configured to call and run a computer program from a memory to enable a device in which the chip is installed to perform the method of any one of claims 1 to 23.

83. A computer readable storage medium, configured to store a computer program, wherein the computer program enables a computer to perform the method of any one of claims 1 to 23.

84. A computer program product, comprising computer program instructions, wherein the computer program instructions enable a computer to perform the method of any one of claims 1 to 23.

85. A computer program, wherein the computer program enables a computer to perform the method of any one of claims 1 to 23.

86. A network device, comprising a processor and a memory, wherein the memory is configured to store a computer program, and the processor is configured to call and run the computer program stored in the memory to perform the method of any one of claims 24 to 40.

87. A chip, comprising: a processor, configured to call and run a computer program from a memory to enable a device in which the chip is installed to perform the method of any one of claims 24 to 40.

88. A computer readable storage medium, configured to store a computer program, wherein the computer program enables a computer is enabled to perform the method of any one of claims 24 to 40.

89. A computer program product, comprising computer program instructions, wherein the computer program instructions enable a computer to perform the method of any one of claims 24 to 40.

90. A computer program, wherein the computer program enables a computer to perform the method of any one of claims 24 to 40.

91. A communication system, comprising:
the terminal device of any one of claims 41 to 63; and
the network device of any one of claims 64 to 80.
